(19) Europäisches Patentamt
European Patent Office
Office européen des brevets

(11) **EP 3 283 322 B1**

(12) **EUROPÄISCHE PATENTSCHRIFT**

(45) Veröffentlichungstag und Bekanntmachung des Hinweises auf die Patenterteilung:
**25.05.2022 Patentblatt 2022/21**

(21) Anmeldenummer: **16718281.5**

(22) Anmeldetag: **12.04.2016**

(51) Internationale Patentklassifikation (IPC):
**B60L 3/00** (2019.01)   **B60L 9/00** (2019.01)

(52) Gemeinsame Patentklassifikation (CPC):
**B60L 9/00; B60L 3/0023;** B60L 2240/12;
B60L 2240/421; B60L 2240/425; B60L 2240/429;
Y02T 10/64

(86) Internationale Anmeldenummer:
**PCT/EP2016/057969**

(87) Internationale Veröffentlichungsnummer:
**WO 2016/166081 (20.10.2016 Gazette 2016/42)**

(54) **ANTRIEBSCHUTZVORRICHTUNG ZUM SCHÜTZEN EINES FAHRANTRIEBS**

DRIVE PROTECTION DEVICE FOR PROTECTING A DRIVE

DISPOSITIF PROTECTEUR D'ENTRAÎNEMENT SERVANT À PROTÉGER UN SYSTÈME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2015 DE 102015206561**

(43) Veröffentlichungstag der Anmeldung:
**21.02.2018 Patentblatt 2018/08**

(73) Patentinhaber: **Siemens Mobility GmbH**
**81739 München (DE)**

(72) Erfinder:
• **CAI, Jumei**
**91080 Marloffstein (DE)**
• **GLINKA, Martin**
**91080 Uttenreuth (DE)**

(56) Entgegenhaltungen:
EP-A1- 2 234 262   EP-A1- 2 418 116
EP-A1- 2 755 320   US-A1- 2012 209 467

EP 3 283 322 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Antriebschutzvorrichtung zum Schützen eines Fahrantriebs bei einem Fahrzeug, insbesondere einem Schienenfahrzeug, mit zumindest einer Schalteinheit, die eine Einschaltstellung und eine den Fahrantrieb schützende Ausschaltstellung aufweist, und einer Steuereinheit, die dazu vorgesehen ist, in zumindest einer ersten Betriebssituation beim Liegen einer Betriebsgröße des Fahrantriebs in einem kritischen Bereich einen Übergang in die Ausschaltstellung auszulösen.

Es ist bereits vorgeschlagen worden, in Fahrzeugantrieben - insbesondere bei einem Schienenfahrzeug - ein Motorschütz einzusetzen, welches zum Schutz eines Fahrmotors und/oder einer dem Fahrmotor zugeordneten Leistungsversorgungseinheit eine elektrische Verbindung zwischen dieser und dem Fahrmotor unterbricht, wenn eine kritische, für den Fahrzeugantrieb potentiell schädliche Betriebssituation eintritt.

Der Erfindung liegt die Aufgabe zugrunde, eine gattungsgemäße Antriebschutzvorrichtung bereitzustellen, die hinsichtlich eines möglichst breiten Spektrums von Betriebssituationen des Fahrzeugs mit einem hohen Sicherheitsgrad einsetzbar und dennoch konstruktiv einfach und kostengünstig ausführbar ist.

Hierzu wird vorgeschlagen, dass die Steuereinheit dazu vorgesehen ist, in zumindest einer zweiten Betriebssituation beim Liegen der Betriebsgröße im kritischen Bereich ein Aufrechterhalten der Einschaltstellung zu bewirken. Hierdurch kann eine Antriebsschutzvorrichtung bereitgestellt werden, die eine konstruktiv einfache und kostengünstige Schalteinheit aufweist und dennoch an mehrere Betriebssituationen des Fahrzeugs angepasst ist. Dabei kann ein für die Schalteinheit ungünstiger und insbesondere potentiell schädigender Ausschaltvorgang in der zweiten Betriebssituation vermieden werden.

Der Fahrantrieb weist zweckmäßigerweise zumindest einen Fahrmotor und eine Leistungsversorgungseinheit auf, die zur Versorgung des Fahrmotors mit elektrischer Leistung vorgesehen ist. Die Leistungsversorgungseinheit kann insbesondere eine Gruppe von Fahrmotoren versorgen. Sie weist herkömmlicherweise zumindest eine Stromrichtereinheit auf, welche ein elektrisches Signal mit bestimmten Eigenschaften gemäß einer zu erzeugenden Leistung für den zumindest einen Fahrmotor erzeugt.

Der zumindest eine Fahrmotor ist insbesondere als Drehstrommotor ausgebildet, wobei die Stromrichtereinheit sinnvollerweise zur Erzeugung eines Drehstroms vorgesehen ist. In einer bevorzugten Ausführung der Erfindung findet die vorgeschlagene Antriebsschutzvorrichtung bei einem Fahrantrieb Anwendung, bei welchem der zumindest eine Fahrmotor als permanent-erregte Synchronmaschine ausgebildet ist. Mittels der Antriebschutzvorrichtung kann ein Schutz des zumindest einen Fahrmotors und/oder der Leistungsversorgungseinheit erreicht werden. Die Antriebschutzvorrichtung kann ferner ein Bestandteil der Leistungsversorgungseinheit sein. Nimmt diese die Form eines Stromrichtercontainers an, kann die Antriebsschutzvorrichtung im Stromrichtercontainer angeordnet sein.

Die Stromrichtereinheit bezieht in typischen Ausführungen eine elektrische Energie insbesondere aus einem Gleichspannungszwischenkreis und hat dabei die Funktion eines Wechselrichters. Der Gleichspannungszwischenkreis kann mit elektrischer Energie aus einer externen Netzspannungsversorgung, einer fahrzeugseitigen Energiespeichereinheit und/oder einer fahrzeugseitigen Generatoreinheit gespeist werden. Die Leistungsversorgungseinheit kann neben der Stromrichtereinheit und dem Spannungszwischenkreis eine den Spannungszwischenkreis speisende, weitere Stromrichtereinheit aufweisen. Diese hat typischerweise die Funktion eines Gleichrichters.

Ein Fahrzeug, in welchem zumindest ein Fahrantrieb mittels der vorgeschlagenen Antriebsschutzvorrichtung geschützt ist, kann als schienengebundenes Fahrzeug oder als ein weiteres Fahrzeug sein, welches elektrische Fahrmotoren aufweist. Beispielsweise kann das Fahrzeug als Omnibus mit elektrischen Fahrmotoren ausgebildet sein. Die Erfindung eignet sich jedoch insbesondere für den Einsatz bei einem Schienenfahrzeug, bei welchem besonders hohe Leistungen zwischen Leistungsversorgungseinheiten und jeweils zugeordneten Fahrmotoren übertragen werden.

Unter einer "Ausschaltstellung" der Schalteinheit soll eine Stellung verstanden werden, welche ein Versetzen des Fahrantriebs in einen Ausschaltzustand bewirkt. Weist der Fahrantrieb wie oben beschrieben zumindest einen Fahrmotor und eine Leistungsversorgungseinheit auf, wird mit dem Übergang in die Ausschaltstellung zumindest der Fahrmotor in dessen Ausschaltzustand versetzt. Die Ausschaltstellung dient zum Schutz des zumindest einen Fahrmotors und vorteilhafterweise der Leistungsversorgungseinheit, da die Ausschaltstellung eine gegenseitige Beeinflussung des zumindest einen Fahrmotors und der Leistungsversorgungseinheit verhindern kann.

Die Betriebsgröße charakterisiert einen Betriebszustand des Fahrantriebs. Weist dieser wie oben beschrieben zumindest einen Fahrmotor und eine Leistungsversorgungseinheit auf, kann sie eine Betriebsgröße für einen Betrieb des zumindest einen Fahrmotors und/oder der Leistungsversorgungseinheit sein. Als Betriebsgröße ist eine Temperatur, eine elektrische Spannung, eine Stromamplitude, eine Leistung, eine Frequenz usw. denkbar, wobei für die Betriebsgröße zumindest ein kritischer Bereich definiert ist, in welchem sie für den Fahrantrieb schädlich ist. Zur Berücksichtigung der Betriebsgröße durch die Steuereinheit steht diese sinnvollerweise mit zumindest einer Erfassungseinheit in Wirkverbindung, die zur Erfassung einer Kenngröße dient, welche der Betriebsgröße oder einer für die Betriebsgröße repräsentativen Kenngröße entspricht. Außerdem weist die Steuereinheit zweckmäßigerweise eine Recheneinheit auf, die zur Auswertung der erfassten Kenngröße vorgesehen ist. Vorteilhafterweise steht diese Recheneinheit in Wirkverbindung mit einer Dateneinheit, in welcher den kritischen Bereich charakterisierende Daten, z.B. zumindest ein Schwellwert und/oder eine Kennlinie, gespeichert sind.

Die Steuereinheit steht zweckmäßigerweise außerdem in Wirkverbindung mit einer Erfassungseinheit, die dazu vorgesehen ist, zumindest eine für die aktuell vorliegende Betriebssituation repräsentative Kenngröße zu erfassen. Auf der Grundlage der Kenngröße kann das Vorliegen der ersten oder der zweiten Betriebssituation ermittelt werden.

Es kann eine konstruktiv einfache Ausführung der Schalteinheit erreicht werden, wenn die Schalteinheit dazu vorgesehen ist, in der Ausschaltstellung zumindest eine elektrische Verbindung zwischen zumindest einem Fahrmotor und einer Stromrichtereinheit des Fahrantriebs zu unterbrechen. Die Stromrichtereinheit ist vorzugsweise Bestandteil einer oben beschriebenen Leistungsversorgungseinheit des Fahrantriebs. Der Begriff "zwischen" bezieht sich hierbei um einen Leistungsfluss, welcher bei hergestellter elektrischer Verbindung von der Stromrichtereinheit zum zumindest einen Fahrmotor oder umgekehrt übertragbar ist.

Außerdem kann eine besonders kostengünstige und kompakte Ausbildung der Antriebsschutzvorrichtung erreicht werden, wenn die Schalteinheit ein Schütz aufweist, das zum Unterbrechen hochfrequenter Ströme ausgelegt ist. Unter einem "hochfrequenten" Strom soll ein elektrischer Strom mit einer Frequenz von zumindest 5 Hz, insbesondere zumindest 10 Hz verstanden werden. Solche Schütze, die eine maximale bzw. optimale Abschaltfähigkeit für hochfrequente Ströme aufweisen, sind weit verbreitet und weisen herkömmlicherweise einen kompakten Aufbau auf. Beispielweise kann das Schütz als Vakuumschütz ausgebildet sein, das - gegenüber mit Löschkammer ausgestatteten Schützen - kompakter ausgebildet ist und ein erheblich geringeres Gewicht hat.

Erfindungsgemäß ist die Steuereinheit dazu vorgesehen, das Aufrechterhalten der Einschaltstellung in Abhängigkeit von einer Kenngröße zu bewirken, die von der Fahrzeugdynamik abhängt. Das Vorliegen der ersten oder der zweiten Betriebssituation hängt hiermit von der Fahrzeugdynamik ab.

In einer nicht durch die Erfindung abgedeckten Ausführung kann die Fahrzeugdynamik durch die Betriebssituationen "Fahren" und "Stillstand" gekennzeichnet sein. Ein die Schalteinheit besonders schonender Betrieb kann jedoch erreicht werden, wenn die Kenngröße als Geschwindigkeitskenngröße ausgebildet ist. Unter einer "Geschwindigkeitskenngröße" soll eine Kenngröße verstanden werden, die für die Fahrzeuggeschwindigkeit repräsentativ ist. Sie kann der Geschwindigkeit oder einer Kenngröße entsprechen, aus welcher die Geschwindigkeit ermittelt werden kann. Die Geschwindigkeitskenngröße kann eine Drehzahl, eine Frequenz, eine Spannung usw. sein. Die erste Betriebssituation und die zweite Betriebssituation werden dabei durch zumindest einen Schwellwert für die Fahrzeuggeschwindigkeit und/oder die für diese Geschwindigkeit repräsentative Geschwindigkeitskenngröße definiert, wobei die erste Betriebssituation einer Fahrt in einem hohen Geschwindigkeitsbereich, d.h. mit einer Fahrzeuggeschwindigkeit bzw. Geschwindigkeitskenngröße oberhalb des Schwellwerts entspricht und die zweite Betriebssituation einer Fahrt in einem niedrigen Geschwindigkeitsbereich entspricht. Insbesondere ist der Schwellwert für eine Geschwindigkeit von ca. 10 km/h repräsentativ.

Dies eignet sich für die oben beschriebene Ausführung der Schalteinheit mit einem Schütz, welches zum Unterbrechen hochfrequenter Ströme ausgelegt ist. Durch die vorgeschlagene Ansteuerung kann zuverlässig vermieden werden, dass diese einen Gleichstrom bzw. Wechselstrom mit geringer Frequenz schaltet. Da die Fahrmotorströme typischerweise ausschließlich bei niedrigen Fahrzeuggeschwindigkeiten bzw. im Stillstand diese für solche Schütze, insbesondere für Vakuumschütze, kritischen Eigenschaften aufweisen, kann vorteilhaft eine konsequente Vermeidung von Abschaltvorgängen dieser Schütze in diesem kritischen Geschwindigkeitsbereich erfolgen.

Alternativ oder zusätzlich wird vorgeschlagen, dass die Steuereinheit dazu vorgesehen ist, das Aufrechterhalten der Einschaltstellung in Abhängigkeit von einer als Frequenzkenngröße eines über die Schalteinheit geführten Stroms ausgebildeten Kenngröße zu bewirken. Hierzu steht die Steuereinheit sinnvollerweise in Wirkverbindung mit einer Erfassungseinheit zur Erfassung der Frequenzkenngröße. Unter einer "Frequenzkenngröße" soll eine Kenngröße verstanden werden, die für die Frequenz des betrachteten Stroms repräsentativ ist. Sie kann der Frequenz oder einer Kenngröße entsprechen, aus welcher diese Frequenz ermittelt werden kann.

Zur Erfassung der von der Steuereinheit für das Aufrechterhalten der Einschaltstellung zu berücksichtigenden Kenngröße steht die Steuereinheit zweckmäßigerweise mit zumindest einer Erfassungseinheit zur Erfassung der Kenngröße in Wirkverbindung. In einer vorteilhaften Weiterbildung der Erfindung kann die Steuereinheit vorteilhaft mit einer Fahrzeugsteuerung in Wirkverbindung stehen, von welcher sie die Kenngröße empfängt, wodurch auf den Einbau einer der Steuereinheit lokal zugeordneten Erfassungseinheit vermieden werden kann. Die Verbindung der Steuereinheit mit der Fahrzeugsteuerung kann über einen Datenbus und/oder eine analoge Steuerleitung erfolgen. Außerdem weist eine im Fahrzeug zentral zur Verfügung gestellte Kenngröße typischerweise einen hohen Zuverlässigkeitsgrad auf. Die oben vorgeschlagene Berücksichtigung einer Geschwindigkeitskenngröße als Kenngröße weist in diesem Zusammenhang außerdem den Vorteil auf, dass die Fahrzeuggeschwindigkeit bereits für weitere Funktionen im Fahrzeug - bei einem Schienenfahrzeug insbesondere eine Antriebssteuerung oder eine Zugsicherung - ermittelt wird.

Es kann ferner ein besonders sicherer Betrieb erreicht werden, wenn die Antriebsschutzvorrichtung eine Energiespeichereinheit aufweist, die zur Versorgung der Steuereinheit vorgesehen ist. Die Energiespeichereinheit, welche sinnvollerweise der Steuereinheit räumlich zugeordnet ist, stellt neben einer regulären, bestehenden Spannungsversorgung zur Versorgung der Steuereinheit insbesondere eine Notversorgung dar, welche die Steuereinheit bei einem Ausfall der regulären Spannungsversorgung versorgen kann. Die gespeicherte Energie soll für die Aufrechthaltung der Einschaltstellung der Schalteinheit beim Vorliegen der zweiten Betriebssituation zumindest für einen Zeitraum ausreichend bemessen sein, welcher ausgehend von der zweiten Betriebssituation zum Bringen des Fahrzeugs in die erste Betriebssituation notwendig ist. Insbesondere beträgt diese Zeitraum ca. 20 s.

Die Erfindung betrifft außerdem eine Leistungsversorgungseinheit eines Fahrantriebs, insbesondere für ein Schienenfahrzeug, die zur Versorgung zumindest eines Fahrmotors des Fahrantriebs vorgesehen ist und zumindest eine Antriebsschutzvorrichtung gemäß einer der oben vorgeschlagenen Ausführungen aufweist. Dadurch kann eine Leistungsversorgungseinheit, die insbesondere die Form eines Stromrichtercontainers annehmen kann, hinsichtlich der oben beschriebenen Vorteile der Antriebsschutzvorrichtung kompakt aufgebaut werden. Besonders vorteilhaft kann ein herkömmlicher Stromrichtercontainer mit einer vorgeschlagenen Antriebsschutzvorrichtung nachgerüstet werden, da sich diese besonders einfach in den Stromrichtercontainer integrieren lässt. Die Leistungsversorgungseinheit weist sinnvollerweise zumindest eine Stromrichtereinheit auf, welche die Funktion eines Wechselrichters hat. Dabei ist die Antriebsschutzvorrichtung im Betrieb vorzugsweise zwischen der Stromrichtereinheit und zumindest einem von ihr versorgbaren Fahrmotor angeordnet. Der Stromrichtercontainer kann neben dieser Stromrichtereinheit eine weitere Stromrichtereinheit, die die Funktion eines Gleichrichters hat, und einen die Stromrichtereinheiten verbindenden Gleichspannungszwischenkreis umfassen. In einer weiteren Ausführung können diese Stromrichtereinheiten in räumlich voneinander getrennten Stromrichtercontainern angeordnet sein.

Des Weiteren betrifft die Erfindung ein Fahrzeug, insbesondere Schienenfahrzeug, mit einem Fahrantrieb und einer zum Schutz des Fahrantriebs vorgesehenen Antriebsschutzvorrichtung in einer der oben beschriebenen Ausführungen.

Diese eignet sich insbesondere für eine Ausführung des Fahrantriebs, in welcher dieser zumindest einen permanenterregten Synchronmotor aufweist.

Ferner betrifft die Erfindung ein Verfahren zum Betreiben eines Fahrantriebs bei einem Fahrzeug, insbesondere einem Schienenfahrzeug, bei welchem in einer ersten Betriebssituation beim Liegen einer Betriebsgröße des Fahrantriebs in einem kritischen Bereich zumindest eine Schalteinheit einer Antriebsschutzvorrichtung ausgehend von einer Einschaltstellung in eine den Fahrantrieb schützende Ausschaltstellung übergeht.

Es wird vorgeschlagen, dass in zumindest einer zweiten Betriebssituation beim Liegen der Betriebsgröße des Fahrantriebs im kritischen Bereich die Einschaltstellung aufrechterhalten wird. Zu den vorteilhaften Wirkungen des vorgeschlagenen Verfahrens und von dessen Weiterbildungen wird auf die obigen Ausführungen zur Antriebsschutzvorrichtung verwiesen.

Erfindungsgemäß wird vorgeschlagen, dass eine von der Fahrzeugdynamik abhängige Kenngröße erfasst wird und die Einschaltstellung in Abhängigkeit der Kenngröße aufrechterhalten wird und - beim Liegen der Betriebsgröße des Fahrantriebs im kritischen Bereich und in der zweiten Betriebssituation beim Liegen der Kenngröße in einem kritischen Bereich - die Geschwindigkeit des Fahrzeugs zumindest solange geändert wird, bis die erste Betriebssituation eintritt, wobei die Schalteinheit dann in die den Fahrantrieb schützende Ausschaltstellung übergeht. Das Eintreten der ersten Betriebssituation kann durch eine Überwachung der Kenngröße ermittelt werden. Es kann insbesondere dadurch erkannt werden, dass die Kenngröße einen in Bezug auf die Schalteigenschaften der Schalteinheit zulässigen Wert annimmt.

Dabei kann das Fahrzeug - beim Erkennen eines Werts der Betriebsgröße im kritischen Bereich und wenn die Kenngröße, insbesondere eine Geschwindigkeitskenngröße oder eine Frequenzkenngröße eines über die Schalteinheit geführten Stroms, in einem kritischen Bereich liegt - zum Stillstand gebremst oder solange beschleunigt werden, bis die Fahrzeuggeschwindigkeit einen vorgegebenen Schwellwert - z.B. 10 km/h - übersteigt. Erst im Stillstand bzw. bei einer ausreichenden Fahrzeuggeschwindigkeit erfolgt ein Übergang der Schalteinheit in die Ausschaltstellung.

Es werden Ausführungsbeispiele der Erfindung anhand der Zeichnungen erläutert. Es zeigen:

Figur 1:    ein Schienenfahrzeug mit Fahrantrieben in einer Seitenansicht,

Figur 2:    einen Fahrantrieb mit einer Antriebsschutzvorrichtung,

Figur 3:    eine detaillierte Darstellung der Antriebschutzvorrichtung und

Figur 4:    die Antriebsschutzvorrichtung in einer weiteren Ausführung mit einer Datenbusanbindung.

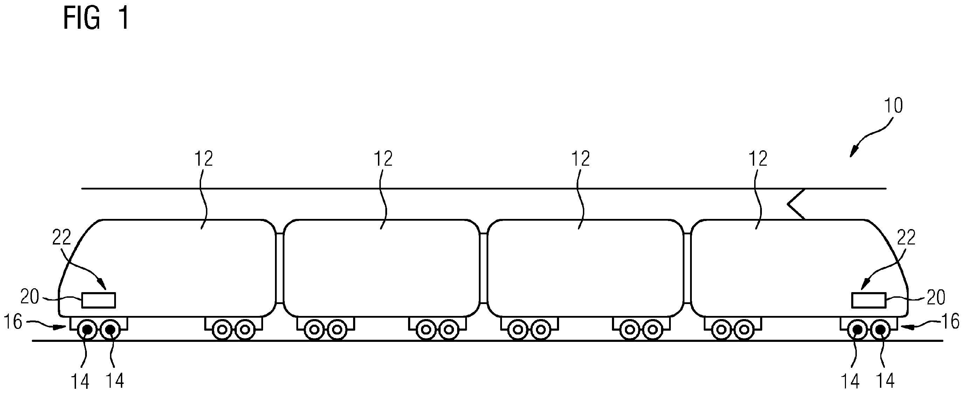

Figur 1 zeigt ein als Schienenfahrzeug 10 ausgebildetes Fahrzeug in einer schematischen Seitenansicht. Es ist als Verband von Wagen 12 ausgebildet, die jeweils für die Beförderung von Personen vorgesehen sind. Zumindest einer der Wagen 12 ist als Triebwagen mit wenigstens einer Triebachse 14 ausgebildet. In der betrachteten Ausführung sind die Endwagen jeweils auf einem Triebdrehgestell 16 mit einem Paar von Triebachsen 14 abgestützt. Die gezeigte Ausführung ist beispielhaft und es sind weitere Achsenverteilungen denkbar. Der gezeigte Verband von Personenwagen 12 bildet einen sogenannten Triebzug, wobei eine Ausbildung des Schienenfahrzeugs 10 gemäß einer weiteren Ausführung als Lokomotive ebenfalls möglich ist.

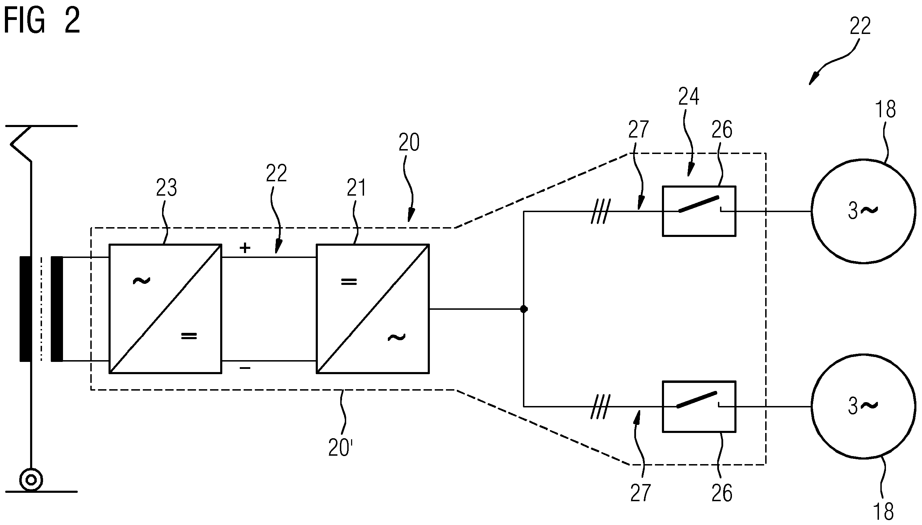

Die Triebachsen 14 werden jeweils durch einen Fahrmotor 18 (siehe Figur 2) angetrieben, welcher im entsprechenden Triebdrehgestell 16 gelagert ist. Die Fahrmotoren 18 eines Triebdrehgestells 16 werden durch eine Leistungsversorgungseinheit 20 mit elektrischer Leistung versorgt, die dem jeweiligen Triebdrehgestell 16 räumlich zugeordnet ist. Wie in Figur 2 zu sehen, weist die Leistungsversorgungseinheit 20 eine Stromrichtereinheit 21 auf, die eine elektrische Energie aus einem Gleichspannungszwischenkreis 22 bezieht und diese in der Form eines elektrischen Signals mit bestimmten Eigenschaften umwandelt, welches in einem Traktionsbetrieb in die zugeordneten Fahrmotoren 18 eingespeist wird. Die Fahrmotoren 18 sind insbesondere als Drehstrommaschinen ausgebildet, wobei die Stromrichtereinheit 21 zur Erzeugung eines Drehstroms variabler Frequenz vorgesehen ist. Beispielsweise ist die Stromrichtereinheit 21 als Pulswechselrichter (oder "PWR") ausgebildet. Die Fahrmotoren 18 sind in der betrachteten Ausführung jeweils als permanent-erregte Synchronmaschine (oder "PEM") ausgebildet.

Die Leistungsversorgungseinheiten 20 weisen neben der Stromrichtereinheit 21 und dem Gleichspannungszwischenkreis 22 eine weitere Stromrichtereinheit 23 auf, welche die Funktion eines Gleichrichters hat und den Gleichspannungszwischenkreis 22 mit elektrischer Energie speist. Typischerweise ist die Stromrichtereinheit 23 als Vierquadrantensteller (oder "4QS") ausgebildet. Die Stromrichtereinheit 23 richtet im Betrieb eine Wechselspannung gleich, die einer von einem Transformator heruntertransformierten Netzspannung entspricht. Alternativ kann die Wechselspannung der Ausgangsspannung eines Generators des Schienenfahrzeugs 10 sein. Des Weiteren kann der Gleichspannungszwischenkreis 22 direkt mit einer netzseitigen Gleichspannung gespeist werden.

Die Leistungsversorgungseinheiten 20 können die Form eines Stromrichtercontainers 20' annehmen, welcher die Stromrichtereinheiten 21 und 23 umfasst und in Figur 2 schematisch gestrichelt dargestellt ist. In einer alternativen Ausführung können die Stromrichtereinheiten 21 und 23 in räumlich voneinander getrennten Containern angeordnet sein.

Die Fahrmotoren 18 eines Triebdrehgestells 16 und die jeweilige Leistungsversorgungseinheit 20 bilden jeweils einen Fahrantrieb 22.

Figur 2 zeigt einen der Fahrantriebe 22 des Schienenfahrzeugs 10 aus Figur 1 und eine Antriebsschutzvorrichtung 24 zum Schützen des Fahrantriebs 22. Diese weist Schalteinheiten 26 auf, die jeweils zwischen einem Fahrmotor 18 und der Stromrichtereinheit 21 der dem Fahrmotor 18 zugeordneten Leistungsversorgungseinheit 20 geschaltet sind. Eine Schalteinheit 26 ist zur Herstellung und Unterbrechung einer elektrischen Verbindung 27 vorgesehen, wobei bei hergestellter elektrischer Verbindung - und in einem Traktionsmodus des Fahrantriebs 22 - eine Leistungsübertragung von der Leistungsversorgungseinheit 20 zu dem zugeordneten Fahrmotor 18 oder - in einem generatorischen Modus des Fahrantriebs 22, insbesondere einem Bremsmodus - in umgekehrter Richtung erfolgt. Die Antriebsschutzvorrichtung 24 kann von der Leistungsversorgungseinheit 20 getrennt ausgeführt sein. In der gezeigten Ausführung ist sie jedoch Bestandteil der Leistungsversorgungseinheit 20 und befindet sich im Stromrichtercontainer 20'.

Die Stellung der Schalteinheit 26 bei hergestellter Verbindung 27 ist "Einschaltstellung" genannt, wobei die die elektrische Verbindung trennende Schaltung "Ausschaltstellung" genannt ist. Mit einer Betätigung der einem Fahrmotor 18 zugeordneten Schalteinheit 26 in ihre Ausschaltstellung können der Fahrmotor 18 und die Leistungsversorgungseinheit 20 u.a. in folgenden Betriebssituationen vor einer Beschädigung geschützt werden: Überlastung, insbesondere thermische Überlastung des Fahrmotors, Motorfehler, insbesondere Motorkurzschluss, Fehler, insbesondere Ventilausfall, in der Leistungsversorgungseinheit 20 und/oder Fehler, insbesondere Kurzschluss, im Gleichstromzwischenkreis 22.

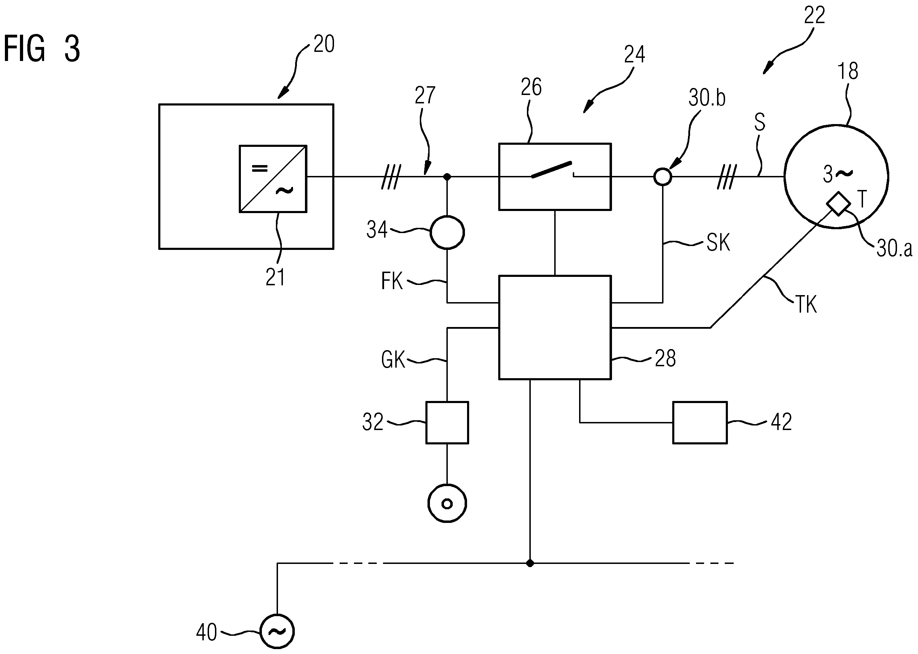

Die Funktionsweise der Antriebsschutzvorrichtung 24 wird anhand der Figur 3 erläutert, in welcher der Übersichtlichkeit halber lediglich die elektrische Verbindung 27 zwischen einem Fahrmotor 18 und der zugeordneten Leistungsversorgungseinheit 20 betrachtet wird.

Die Betätigung der Schalteinheit 26 ist ansteuerbar. Hierzu weist die Antriebsschutzvorrichtung 24 eine Steuereinheit 28 auf. Diese ist insbesondere zur elektromechanischen Betätigung der Schalteinheit 26 vorgesehen, indem Schaltelemente der Schalteinheit 26 beispielsweise durch Anlegen bzw. Unterbrechen einer Steuerspannung durch die Steuereinheit 28 betätigt werden. Die Ansteuerung der Schalteinheit 26 erfolgt in Abhängigkeit von zumindest einer Betriebsgröße des Fahrantriebs 22. Die Betriebsgröße kann z.B. eine Temperatur eines Fahrmotors 18, die Amplitude eines über die elektrische Verbindung 27 geführten Stroms, eine an Motorklemmen liegende Spannung usw. sein. Die Steuereinheit 28 steht hierzu mit einer Erfassungseinheit 30 in Wirkverbindung, die zur Erfassung zumindest einer Kenngröße für eine Betriebsgröße des Fahrantriebs 22 vorgesehen ist. Die Erfassungseinheit 30 weist z.B. eine Sensoreinheit 30.a zur Erfassung einer Temperaturkenngröße TK für eine erste Betriebsgröße T als Betriebstemperatur des Fahrmotors 18 und eine Sensoreinheit 30.b zur Erfassung einer Stromkenngröße SK für eine zweite Betriebsgröße S als die Amplitude eines über die elektrische Verbindung 27 geführten Stroms auf.

Liegt die von der Steuereinheit 28 überwachte Betriebsgröße T oder S in einem kritischen Bereich, insbesondere oberhalb oder unterhalb eines bestimmten Schwellwerts, wird grundsätzlich ausgehend von der Einschaltstellung der Schalteinheit 26 ein Übergang in die Ausschaltstellung von der Steuereinheit 28 ausgelöst.

Die Schalteinheit 26 ist als Schütz ausgebildet, welches zur Abschaltung hochfrequenter elektrischer Ströme ausgelegt ist. Insbesondere ist das Schütz als Vakuumschütz ausgebildet. Ein derartiges Schütz weist für einen bei hergestellter elektrischer Verbindung 27 von dieser geführten niederfrequenten Strom oder Gleichstrom eine geringe Abschaltfähigkeit auf. Ein Übergang in die Ausschaltstellung soll demnach vermieden werden, wenn aufgrund einer vorliegenden Betriebssituation ein derartiger niederfrequenter Strom oder Gleichstrom über die elektrische Verbindung 27 geführt wird. Hierzu ist die Steuereinheit 28 dazu vorgesehen, in einer solchen Betriebssituation ein Aufrechterhalten der Einschaltstellung zu bewirken, und zwar dann auch, wenn die überwachte Betriebsgröße T oder S des Fahrantriebs 22 im kritischen Bereich liegt und ein Übergang in die Ausschaltstellung daher erforderlich wäre.

Gemäß einer ersten Ausführung ist die Steuereinheit 28 dazu vorgesehen, das Aufrechterhalten der Einschaltstellung in Abhängigkeit von einer Kenngröße GK zu bewirken, die von der Fahrzeugdynamik abhängt. In der betrachteten Ausführung ist die von der Steuereinheit 28 überwachte Kenngröße GK eine Geschwindigkeitskenngröße, die für die Fahrzeuggeschwindigkeit repräsentativ ist. Hierzu steht die Steuereinheit 28 in Wirkverbindung mit einer Erfassungseinheit 32, die zur Erfassung einer die Geschwindigkeitskenngröße bildenden Drehzahl einer Radachse des Schienenfahrzeugs 10 vorgesehen ist. Die Steuereinheit 28 weist eine Auswertelogik auf, welche die erfasste Drehzahl derart auswertet, dass das oben beschriebene Aufrechterhalten der Einschaltstellung für Fahrzeuggeschwindigkeiten unterhalb eines bestimmten Schwellwerts, z.B. 10 km/h erfolgt. In einer ersten Betriebssituation mit einer Fahrzeuggeschwindigkeit oberhalb des Schwellwerts wird ein Übergang in die Ausschaltstellung von der Steuereinheit 28 ausgelöst, sobald die überwachte Betriebsgröße T oder S des Fahrantriebs 22 in den kritischen Bereich gelangt. Bei einer zweiten Betriebssituation mit einer Fahrzeuggeschwindigkeit unterhalb des Schwellwerts wird die Einschaltstellung aufrechterhalten, und zwar dann auch wenn die überwachte Betriebsgröße T oder S einen kritischen bzw. unzulässigen Wert annimmt.

Gemäß einer zweiten Ausführung ist die Steuereinheit 28 - alternativ oder wie in der Figur dargestellt zusätzlich - dazu vorgesehen, das Aufrechterhalten der Einschaltstellung in Abhängigkeit von einer Frequenzkenngröße FK des über die elektrische Verbindung 27 geführten Stroms zu bewirken. Hierzu steht die Steuereinheit 28 mit einer Erfassungseinheit 34 in Wirkverbindung, welche die Frequenzkenngröße FK erfasst.

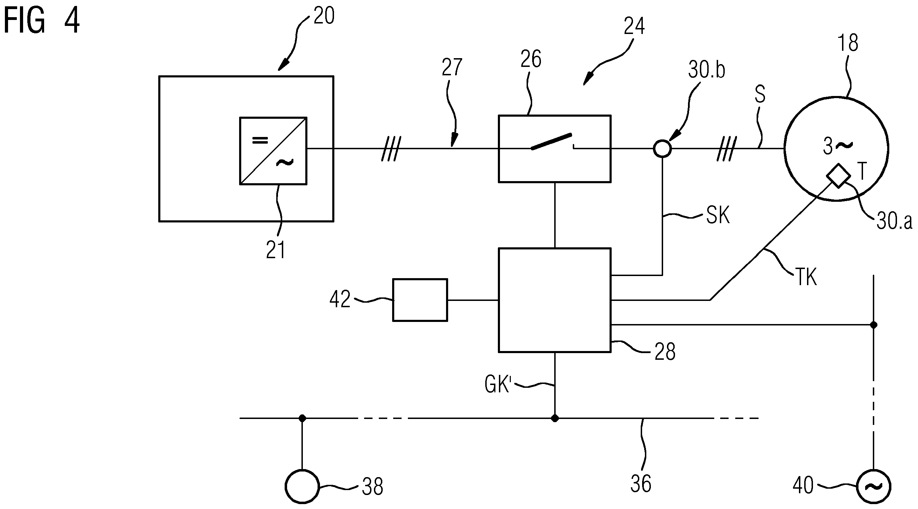

Gemäß einer weiteren, in Figur 4 gezeigten Ausführung steht die Steuereinheit 28 alternativ oder zusätzlich über einen Datenbus 36 mit einer Fahrzeugsteuerung 38 in Wirkverbindung, wobei sie eine Kenngröße GK' - in diesem Fall insbesondere eine Geschwindigkeitskenngröße - von dieser Fahrzeugsteuerung 38 über den Datenbus 36 empfängt. Anstatt eines digitalen Datenbusses kann die Kenngröße über eine analoge Steuerleitung übermittelt werden. Die Fahrzeugsteuerung 38 kann einer Antriebssteuerung, insbesondere zur Steuerung des Fahrantriebs 22, oder einer zentralen Fahrzeugsteuerung entsprechen.

Wie in den Figuren 3 und 4 gezeigt, wird die Steuereinheit 28 von einer Spannungsversorgung 40 mit Spannung versorgt. Insbesondere kann die Spannungsversorgung 40 eine zentrale Spannungsquelle des Schienenfahrzeugs 10 sein. Zusätzlich zur Spannungsversorgung 40 ist eine Energiespeichereinheit 42 vorgesehen, die dem Fahrantrieb 22 räumlich zugeordnet und Bestandteil der Antriebsschutzvorrichtung 24 für den Fahrantrieb 22 ist. Sie dient zur Spannungsversorgung der Steuereinheit 28 bei Ausfall der Spannungsversorgung 40. Die Energiespeichereinheit 42 kann z.B. als Batterie oder Kondensator ausgebildet sein. Sie ist zur Spannungsversorgung zumindest für eine Zeitspanne ausgelegt, die zum Aufrechterhalten der Einschaltstellung ausreicht, bis die überwachte Kenngröße - insbesondere Frequenzkenngröße FK und/oder Geschwindigkeitskengröße GK - einen hinsichtlich der Betätigung der Schalteinheit 26 zulässigen Wert annimmt.

Wie oben beschrieben bewirkt die Steuereinheit 28 ein Aufrechterhalten der Einschaltstellung, wenn die überwachte Kenngröße GK oder FK in einem kritischen Bereich liegt. Die Kenngröße GK bzw. FK nimmt einen Wert in diesem kritischen Bereich an, wenn die Fahrzeuggeschwindigkeit v die Bedingung

$$0 < v < SW$$

erfüllt, wobei z.B. SW = 10 km/h gilt.

Die Einschaltstellung der Schalteinheit 26 wird auch dann aufrechterhalten, wenn eine überwachte Betriebsgröße S oder T des Fahrantriebs in einem kritischen Bereich liegt. Hierdurch wird vermieden, dass die Schalteinheit 26 betätigt wird, wenn über die elektrische Verbindung 27 ein niederfrequenter Strom oder ein Gleichstrom geführt wird, für welchen die Schalteinheit 26 als Vakuumschütz nicht ausgelegt ist. Das Schienenfahrzeug 10 soll nach Erkennen eines unzulässigen Werts der Betriebsgröße T oder S zum Stillstand (v = 0) oder in einen zulässigen Geschwindigkeitsbereich (v ≥ SW) gebracht werden. Hierzu wird das Schienenfahrzeug 10 bis zum Stillstand gebremst, wobei die Betätigung der Schalteinheit 26 erst im Stillstand erfolgt, oder solange beschleunigt, bis die Fahrzeuggeschwindigkeit v den Schwellwert SW erreicht, wobei die Betätigung der Schalteinheit 26 erst dann erfolgt. In beiden Fällen wird die Fahrzeuggeschwindigkeit solange geändert, bis die überwachte Kenngröße GK oder FK einen zulässigen Wert annimmt, wobei die Schalteinheit 26 dann in die den Fahrantrieb 22 schützende Ausschaltstellung übergeht.

Die Geschwindigkeitsänderung erfolgt entweder vollautomatisch mittels einer Fahrzeugsteuerung oder zumindest teilweise manuell durch den Triebfahrzeugführer, nachdem dieser dementsprechend informiert wurde.

**Patentansprüche**

1.  Antriebschutzvorrichtung zum Schützen eines Fahrantriebs (22) eines Fahrzeugs, insbesondere eines Schienenfahrzeugs (10), mit zumindest

    - einer Schalteinheit (26), die eine Einschaltstellung und eine den Fahrantrieb (22) schützende Ausschaltstellung aufweist, und
    - einer Steuereinheit (28), die dazu vorgesehen ist, in einer ersten Betriebssituation und wenn eine Betriebsgröße (T, S) des Fahrantriebs (22) in einem kritischen Bereich liegt, einen Übergang in die Ausschaltstellung auszulösen, wobei die Schalteinheit (26) dazu vorgesehen ist, in der Ausschaltstellung zumindest eine elektrische Verbindung (27) zwischen zumindest einem Fahrmotor (18) und einer Stromrichtereinheit (21) des Fahrantriebs (22) zu unterbrechen, **dadurch gekennzeichnet, dass** die Schalteinheit (26) ein Schütz aufweist, das zum Unterbrechen von Strömen mit einer Frequenz von zumindest 5 Hz, insbesondere zumindest 10 Hz, ausgelegt ist,
    - die Steuereinheit (28) dazu vorgesehen ist, in einer zweiten Betriebssituation und wenn die Betriebsgröße (T, S) in dem kritischen Bereich liegt, ein Aufrechterhalten der Einschaltstellung zu bewirken,
    - die Betriebssituationen jeweils durch eine Geschwindigkeit des Fahrzeugs oder durch eine die Geschwindigkeit des Fahrzeugs repräsentierende Geschwindigkeitskenngröße (GK, GK') definiert sind, wobei die erste Betriebssituation einer Fahrt mit einer Geschwindigkeit gleich oder oberhalb eines Schwellwertes entspricht und wobei die zweite Betriebssituation einer Fahrt mit einer Geschwindigkeit unterhalb des Schwellwertes entspricht, und
    - die Steuereinheit (28) dazu vorgesehen ist, das Aufrechterhalten der Einschaltstellung in Abhängigkeit von einer Geschwindigkeitskenngröße (GK, GK') zu bewirken.

2.  Antriebsschutzvorrichtung nach Anspruch 1, **dadurch gekennzeichnet, dass** die Steuereinheit (28) dazu vorgesehen ist, das Aufrechterhalten der Einschaltstellung in Abhängigkeit von einer als Frequenzkenngröße eines über die Schalteinheit (26) geführten Stroms ausgebildeten Kenngröße (FK) zu bewirken.

3.  Antriebsschutzvorrichtung nach Anspruch 1, **dadurch gekennzeichnet, dass** die Steuereinheit (28) mit einer Fahrzeugsteuerung (38) in Wirkverbindung steht, von welcher sie die Geschwindigkeitskenngröße (GK') empfängt.

4.  Antriebsschutzvorrichtung nach einem der vorhergehenden Ansprüche, **gekennzeichnet durch** eine Energiespeichereinheit (42), die zur Versorgung der Steuereinheit (28) vorgesehen ist.

5.  Leistungsversorgungseinheit eines Fahrantriebs (22) eines Fahrzeugs, insbesondere eines Schienenfahrzeugs (10), die zur Versorgung zumindest eines Fahrmotors (18) des Fahrantriebs (22) vorgesehen ist und zumindest eine Antriebsschutzvorrichtung (24) nach einem der Ansprüche 1 bis 4 aufweist.

6.  Fahrzeug, insbesondere Schienenfahrzeug, mit einem Fahrantrieb (22) und einer zum Schutz des Fahrantriebs (22) vorgesehenen Antriebsschutzvorrichtung (24) nach einem der Ansprüche 1 bis 4.

7.  Verfahren zum Betreiben eines Fahrantriebs (22) eines Fahrzeugs, insbesondere eines Schienenfahrzeugs, bei welchem

    - in einer ersten Betriebssituation und wenn eine Betriebsgröße (T, S) des Fahrantriebs (22) in einem kritischen Bereich liegt, zumindest eine Schalteinheit (26) einer Antriebsschutzvorrichtung (24) ausgehend von einer Einschaltstellung in eine den Fahrantrieb (22) schützende Ausschaltstellung übergeht, wobei die Schalteinheit (26) dazu vorgesehen ist, in der Ausschaltstellung zumindest eine elektrische Verbindung (27) zwischen zumindest einem Fahrmotor (18) und einer Stromrichtereinheit (21) des Fahrantriebs (22) zu unterbrechen, **dadurch gekennzeichnet, dass** die Schalteinheit (26) ein Schütz aufweist, das zum Unterbrechen von Strömen mit einer Frequenz von zumindest 5 Hz, insbesondere zumindest 10 Hz, ausgelegt ist,
    - in einer zweiten Betriebssituation und wenn die Betriebsgröße (T, S) des Fahrantriebs (22) in dem kritischen Bereich liegt, die Einschaltstellung aufrechterhalten wird, wobei die Betriebssituationen jeweils durch eine Geschwindigkeit des Fahrzeugs oder durch eine die Geschwindigkeit des Fahrzeugs repräsentierende Geschwindigkeitskenngröße (GK, GK') definiert sind und wobei die erste Betriebssituation einer Fahrt mit einer Geschwindigkeit gleich oder oberhalb eines Schwellwertes entspricht und wobei die zweite Betriebssituation einer Fahrt mit einer Geschwindigkeit unterhalb des Schwellwertes entspricht, und
- die Einschaltstellung in Abhängigkeit von einer Geschwindigkeitskenngröße (GK, GK') aufrechterhalten wird.

8. Verfahren nach Anspruch 7,
   **dadurch gekennzeichnet, dass**
   eine Frequenzkenngröße (FK) eines über die Schalteinheit (26) geführten Stroms erfasst wird und die Einschaltstellung in Abhängigkeit der Frequenzkenngröße (FK) aufrechterhalten wird.

9. Verfahren nach einem der Ansprüche 7 oder 8,
   **dadurch gekennzeichnet, dass**
   in der zweiten Betriebssituation und wenn die Betriebsgröße (T, S) des Fahrantriebs (22) in einem kritischen Bereich liegt, die Geschwindigkeit des Fahrzeugs zumindest solange geändert wird, bis die erste Betriebssituation eintritt, wobei die Schalteinheit (26) dann in die den Fahrantrieb (22) schützende Ausschaltstellung übergeht.

**Claims**

1. Drive protection device for protecting a traction drive (22) in a vehicle, in particular a rail vehicle (10), comprising at least

   - one switching unit (26) having an activation position and a deactivation position that protects the traction drive (22), and
   - a control unit (28) that is provided to trigger a transition into the deactivation position in a first operating situation and when an operating variable (T, S) of the traction drive (22) is in a critical range,
   wherein
   - the switching unit (26) is provided to interrupt at least one electrical connection (27) between at least one traction motor (18) and a power converter unit (21) of the traction drive (22) in the deactivation position,
   **characterised in that**
   - the switching unit (26) has a contactor which is configured to interrupt currents with a frequency of at least 5 Hz, in particular at least 10 Hz,
   - the control unit (28) is provided to cause the activation position to be maintained in a second operating situation and when the operating variable (T, S) is in the critical range,
   - the operating situations are defined in each case by a speed of the vehicle or by a speed characteristic (GK, GK') which represents the speed of the vehicle, wherein the first operating situation corresponds to a journey with a speed which equates to or exceeds a threshold value and wherein the second operating situation corresponds to a journey with a speed below the threshold value, and
   - the control unit (28) is provided to cause the activation position to be maintained as a function of a speed characteristic (GK, GK').

2. Drive protection device according to claim 1,
   **characterised in that**
   the control unit (28) is provided to cause the activation position to be maintained as a function of a characteristic (FK) embodied as a frequency characteristic of a current conducted by way of the switching unit (26).

3. Drive protection device according to claim 1,
   **characterised in that**
   the control unit (28) is operatively connected to a vehicle controller (38) from which it receives the speed characteristic (GK').

4. Drive protection device according to one of the preceding claims,
   **characterised by**
   an energy storage unit (42) which is provided for supplying the control unit (28).

5. Power supply unit of a traction drive (22) in a vehicle (22), in particular a rail vehicle (10), which is provided for supplying at least one traction motor (18) of the traction drive (22) and has at least one drive protection device (24) according to one of claims 1 to 4.

6. Vehicle, in particular rail vehicle, having a traction drive (22) and a drive protection device (24) according to one of claims 1 to 4 that is provided for protecting the traction drive (22).

7. Method for operating a traction drive (22) in a vehicle, in particular a rail vehicle, in which,

   - in a first operating situation and if an operating variable (T, S) of the traction drive (22) is in a critical range, at least one switching unit (26) of a drive protection device (24), starting from an activation position, transitions into a deactivation position that protects the traction drive (22), wherein
   - the switching unit (26) is provided to interrupt at least one electrical connection (27) between at least one traction motor (18) and a power converter unit (21) of the traction drive (22) in the deactivation position

**characterised in that**
- the switching unit (26) has a contactor which is configured to interrupt currents with a frequency of at least 5 Hz, in particular at least 10 Hz,
- in a second operating situation and if the operating variable (T, S) of the traction drive (22) is in the critical range, the activation position is maintained,
wherein the operating situations are defined in each case by a speed of the vehicle or by a speed characteristic (GK, GK') which represents a speed of the vehicle and wherein the first operating situation corresponds to a journey with a speed which equates to or exceeds a threshold value and wherein the second operating situation corresponds to a journey with a speed below the threshold value, and
- the activation position is maintained as a function of a speed characteristic (GK, GK').

8. Method according to claim 7,
**characterised in that**
a frequency characteristic (FK) of a current conducted by way of the switching unit (26) is detected and the activation position is maintained as a function of the frequency characteristic (FK).

9. Method according to one of claims 7 or 8,
**characterised in that**
in the second operating situation and if the operating variable (T, S) of the traction drive (22) is in a critical range, the speed of the vehicle is changed at least until the first operating situation occurs, wherein the switching unit (26) then transitions into the deactivation position that protects the traction drive (22).

**Revendications**

1. Installation de protection d'un appareillage (22) de roulement d'un véhicule, notamment d'un véhicule (10) ferroviaire, comprenant au moins

- une unité (26) de coupure, qui a une position fermée et une position ouverte protégeant l'appareillage (22) de roulement, et
- une unité (28) de commande, qui est prévue pour déclencher, dans une première situation de fonctionnement et si une grandeur (T, S) de fonctionnement de l'appareillage (22) de roulement se trouve dans une plage critique, un passage à la position ouverte,
dans laquelle
- l'unité (26) de coupure est prévue pour interrompre, dans la position ouverte, au moins une connexion (27) électrique entre au moins un moteur (18) de traction et une unité (21) de convertisseur de l'appareillage (22) de roulement,

**caractérisée en ce que**
- l'unité (26) de coupure a un contacteur, qui est conçu pour interrompre des courants d'une fréquence d'au moins 5 Hz, notamment d'au moins 10 Hz,
- l'unité (28) de commande est prévue pour provoquer, dans une deuxième situation de fonctionnement et si la grandeur (T, S) de fonctionnement se trouve dans la plage critique, un maintien de la position fermée,
- les situations de fonctionnement sont définies respectivement par une vitesse du véhicule ou par une grandeur (GK, GK') caractéristique de vitesse représentant la vitesse du véhicule, la première situation de fonctionnement correspondant à une marche à une vitesse supérieure ou égale à une valeur de seuil et la deuxième situation correspondant à une marche à une vitesse inférieure à la valeur de seuil, et
- l'unité (28) de commande est prévue pour provoquer le maintien de la position fermée en fonction d'une grandeur (GK, GK') caractéristique de vitesse.

2. Protection d'appareillage suivant la revendication 1,
**caractérisée en ce que**
l'unité (28) de commande est prévue pour provoquer le maintien de la position fermée en fonction d'une grandeur (FK) caractéristique constituée sous la forme d'une grandeur caractéristique de fréquence d'un courant passant par l'unité (26) de coupure.

3. Protection d'appareillage suivant la revendication 1,
**caractérisée en ce que**
l'unité (28) de commande est en liaison avec une commande (38) de véhicule de laquelle elle reçoit la grandeur (GK') caractéristique de vitesse.

4. Protection d'appareillage suivant l'une des revendications précédentes,
**caractérisée par**
une unité (42) d'accumulation d'énergie, qui est prévue pour l'alimentation de l'unité (28) de commande.

5. Unité d'alimentation de puissance d'un appareillage (22) de roulement d'un véhicule, notamment d'un véhicule (10) ferroviaire, qui est prévue pour l'alimentation d'au moins un moteur (18) de traction de l'appareillage (22) de roulement et qui a au moins une installation (24) de protection d'appareillage suivant l'une des revendications 1 à 4.

6. Véhicule, notamment véhicule ferroviaire, comprenant un appareillage (22) de roulement et une installation (24) de protection d'appareillage suivant l'une des revendications 1 à 4 prévue pour la protection de l'appareillage (22) de roulement.

7. Procédé pour faire fonctionner un appareillage (22) de roulement d'un véhicule, notamment d'un véhicule ferroviaire, dans lequel

- dans une première situation de fonctionnement et si une grandeur (T, S) de fonctionnement de l'appareillage (22) de roulement est dans une plage critique, au moins une unité (26) de coupure d'une installation (24) de protection d'un appareillage passe d'une position fermée à une position ouverte protégeant l'appareillage (22) de roulement,
dans lequel
- l'unité (26) de coupure est prévue pour interrompre, dans la position ouverte, au moins une connexion (27) électrique entre au moins un moteur (18) de traction et une unité (21) de convertisseur de l'appareillage (22) de roulement, **caractérisé en ce que**
- l'unité (26) de coupure a un contacteur, qui est conçu pour interrompre des courants d'une fréquence d'au moins 5 Hz, notamment d'au moins 10 Hz,
- dans une deuxième situation de fonctionnement et si la grandeur (T, S) de fonctionnement de l'appareillage (22) de roulement se trouve dans la plage critique, on maintient la position fermée, dans lequel les situations de fonctionnement sont définies respectivement par une vitesse du véhicule ou par une grandeur (GK, GK') caractéristique de vitesse représentant la vitesse du véhicule, la première situation de fonctionnement correspondant à une marche à une vitesse supérieure ou égale à une valeur de seuil et la deuxième situation correspondant à une marche à une vitesse inférieure à la valeur de seuil, et
- on maintient la position fermée en fonction d'une grandeur (GK, GK') caractéristique de vitesse.

8. Procédé suivant la revendication 7, **caractérisé en ce que** l'on relève une grandeur (FK) caractéristique de fréquence d'un courant passant par l'unité (26) de coupure et on maintient la position fermée en fonction de la grandeur (FK) caractéristique de fréquence.

9. Procédé suivant l'une des revendications 7 ou 8, **caractérisé en ce que** dans la deuxième situation de fonctionnement et si la grandeur (T, S) de fonctionnement de l'appareillage (22) de roulement est dans une plage critique, on modifie la vitesse du véhicule au moins jusqu'à ce que la première situation de fonctionnement se produise, l'unité (26) de coupure passant alors dans la position ouverte protégeant l'appareillage (22) de roulement.

FIG 1

EP 3 283 322 B1

FIG 2

FIG 3

FIG 4

EP 3 283 322 B1